Europäisches Patentamt

European Patent Office

Office européen des brevets

(19)

(11) Numéro de publication : **0 333 547 B1**

(12) ## FASCICULE DE BREVET EUROPEEN

(45) Date de publication du fascicule du brevet :
**17.06.92 Bulletin 92/25**

(51) Int. Cl.[5] : **C08F 283/02,** C08F 283/01, D06M 15/507

(21) Numéro de dépôt : **89400592.5**

(22) Date de dépôt : **03.03.89**

(54) Nouveaux polyesters sulfonés greffés leur procédé de préparation et leur application à l'encollage des fils et fibrestextiles.

(30) Priorité : **11.03.88 FR 8803169**

(43) Date de publication de la demande :
**20.09.89 Bulletin 89/38**

(45) Mention de la délivrance du brevet :
**17.06.92 Bulletin 92/25**

(84) Etats contractants désignés :
**AT BE CH DE ES FR GB GR IT LI LU NL SE**

(56) Documents cités :
**EP-A- 0 010 582**
**US-A- 4 073 777**
**US-A- 4 158 083**

(73) Titulaire : **RHONE-POULENC CHIMIE**
**25, quai Paul Doumer**
**F-92408 Courbevoie Cédex (FR)**

(72) Inventeur : **Girardeau, Yvette**
**65, Montée de la Sarra fontaines Saint Martin**
**F-69270 Fontaines sur Saone (FR)**
Inventeur : **Charmot, Dominique**
**18, rue Mathis**
**F-75019 Paris (FR)**
Inventeur : **Fiard, Jean-François**
**16, rue de la rue des Orteaux**
**F-75020 Paris (FR)**

(74) Mandataire : **Seugnet, Jean Louis et al**
**RHONE-POULENC CHIMIE Direction de la**
**Propriété Industrielle 25, Quai Paul Doumer**
**F-92408 Courbevoie Cedex (FR)**

EP 0 333 547 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

EP 0 333 547 B1

## Description

La présente invention a pour objet des polyesters sulfonés greffés par des motifs dérivés de monomères vinyliques, leur procédé de préparation et leur application à l'encollage des fils et fibres textiles.

Il est connu d'utiliser dans l'industrie textile des produits d'encollage afin d'améliorer lors du tissage la résistance à l'abrasion des fils et des fibres, lesdits produits d'encollage étant éliminés à l'eau après tissage.

On a proposé dans ce but des dispersions aqueuses ou des solutions de copolymères acryliques ou plus généralement vinyliques ; il a été constaté que de tels produits, en particulier ceux à base d'acétate de vinyle, ne conviennent pas pour l'encollage de tous les fils textiles : par exemple leur adhérence aux fils à base de polyesters est insuffisante.

Des produits intéressants ont été obtenus par copolymérisation d'esters (meth) acryliques et d'acide (meth) acrylique en présence d'un polyester sulfoné hydrodispersable, (demandes japonaises publiées sous les numéros : 34153/1975 et 201079/1986), par exemple à partir de 30 à 60 % d'un polyester sulfoné hydrodispersable et de 70 à 40 % d'un copolymère esters (meth)acryliques / acides (meth) acryliques. Ces produits présentent toutefois l'inconvénient d'être particulièrement onéreux.

Le brevet EP-A-0010582 décrit l'utilisation pour l'encollage de fibres textiles, d'un polyester greffé à groupements carboxyliques libres, constitué d'un polyester insaturé et d'acide carboxylique insaturé choisi essentiellement parmi l'acide acrylique et l'acide méthacrylique.Le caractère hydrosoluble de ce polyester greffé est apporté par le greffage d'une proportion importante d'acide carboxylique insaturé, qui conduit à un produit encore relativement coûteux.

La Demanderesse a trouvé que d'une manière surprenante, un agent d'encollage performant peut être obtenu en diminuant d'une part notablement le taux de polyester sulfoné hydrodispersable et en remplaçant d'autre part la majeure partie des esters (meth) acryliques par de l'acétate de vinyle par exemple, qui est nettement moins onéreux.

Selon l'invention, les nouveaux polyesters sulfonés greffés par des motifs dérivés de monomères vinyliques sont caractérisés en ce qu'ils contiennent :

– de 3 à 30 parties en poids, de préférence de 3 à 15 et tout particulièrement de 5 à 8 parties en poids, d'un polymère tronc constitué par un polyester sulfoné hydrodispersable

– et de 100 parties en poids de greffons dérivés d'une composition monomère comprenant :

. de 5 à 13 parties en poids, de préférence de 6 à 9 parties en poids, d'au moins un acide carboxylique éthyléniquement insaturé ;

. de 12 à 25 parties en poids, de préférence de 17 à 22 parties en poids d'acrylate de butyle ou de 25 à 40 parties en poids, de préférence de 30 à 35 parties en poids d'un mélange de monomères éthyléniquement insaturés choisis parmi les acrylates ou méthacrylates d'alkyle en $C_1$-$C_{20}$, l'acrylonitrile, l'acrylamide ou le styrène, ledit mélange contenant de 60 à 70 % en poids d'acrylate de butyle ;

. et le complément à 100 parties en poids d'au moins un ester monoéthyléniquement insaturé d'un acide carboxylique.

Selon une variante du produit faisant l'objet de l'invention, jusqu'à 10 % environ du poids d'acrylate de butyle peuvent être remplacés par du méthacrylate de butyle.

Un produit préférentiel selon l'invention est constitué par un tronc de polyester sulfoné hydrodispersable portant des greffons dérivés d'au moins un acide carboxylique éthyléniquement insaturé, de l'acrylate de butyle (10 % en poids environ dudit acrylate pouvant être remplacés par du méthacrylate de butyle) et au moins un ester monoéthyléniquement insaturé d'un acide carboxylique, avec un rapport pondéral acrylate de butyle / polyester sulfoné hydrodispersable de l'ordre de 0,8 à 8,5 et de préférence de l'ordre de 2,5 à 4.

Les polyesters sulfonés hydrodispersables de base constituant le tronc sont des produits bien connus du domaine de l'encollage des fils textiles. Ils peuvent être préparés par co-condensation d'un diacide organique (tel qu'un diacide aliphatique saturé ou 'insaturé, un diacide aromatique, un diacide présentant plusieurs noyaux aromatiques, un diacide arylaliphatique), l'un de ses diesters ou son anhydride et d'un diacide organique sulfoné ou l'un de ses diesters avec un diol, en présence d'un catalyseur habituel de polyestérification tel que l'orthotitanate de tétraisopropyle.

Comme monomères de départ couramment utilisés pour la préparation du tronc de polyester sulfoné, hydrodispersable, on peut citer en tant que :

– diacides organiques : les diacides aliphatiques saturés ou insaturés, les diacides aromatiques, tels que les acides succinique, adipique, subérique, sébacique, les acides maléique, fumarique, itaconique, les acides orthophtalique, isophtalique, téréphtalique, les anhydrides de ces acides et leurs diesters comme les diesters méthyliques, éthyliques, propyliques, butyliques. Les composés préférés sont l'acide adipique, les acides orthophtalique, isophtalique, téréphtalique ;

– diacides organiques sulfonés : les diacides sulfonates de sodium ou leurs diesters tels que les dialcoy-

2

lisophtalates et dialcoylsulfosuccinates comme le diméthylisophtalate-5 sulfonate de sodium ou le diméthylsulfosuccinate de sodium ;

– diols : les glycols aliphatiques tels que l'éthylèneglycol, le diéthylèneglycol, le dipropylèneglycol et les homologues supérieurs, le butanediol - 1, 4, l'hexanediol-1,6, le néopentylglycol et les glycols cycliques tels que le cyclohexanediol, le dicyclohexanediolpropane. Les diols choisis préférentiellement sont l'éthylèneglycol et le diéthylèneglycol.

Les polyesters sulfonés hydrodispersables préférés pour constituer le tronc sont ceux qui ont une masse moléculaire moyenne en nombre comprise entre 10.000 et 35.000, un indice d'acide inférieur à 5 mg de KOH/g, un taux de soufre compris entre 0,8 et 2 % en poids, de préférence entre 1,2 et 1,8 %.

Comme monomères dont dérivent les greffons, on peut citer en tant que :

– acide carboxylique éthyléniquement insaturé : l'acide acrylique, l'acide méthacrylique;

– ester monoéthyléniquement insaturé d'acide carboxylique : l'acétate de vinyle, le propionate de vinyle, le butyrate de vinyle, le stéarate de vinyle, le benzoate de vinyle;

– comonomère(s) copolymérisable(s) avec les acides carboxyliques monoéthyléniquement insaturés, les esters monoéthyléniquement insaturés d'acide carboxylique et l'acrylate de butyle : les acrylates ou méthacrylates d'alkyle en $C_1$-$C_{20}$ tels que méthyle, éthyle, propyle, heptadecanyle ; l'acrylonitrile ; l'acrylamide ; styrène;

Les produits faisant l'objet de l'invention peuvent être obtenus par copolymérisation en milieu aqueux de 100 parties en poids, d'une composition monomère constituée :

. de 5 à 13 parties en poids, de préférence de 6 à 9 parties en poids, d'au moins un acide carboxylique éthyléniquement insaturé ;

. de 12 à 25 parties en poids, de préférence de 17 à 22 parties en poids d'acrylate de butyle ou de 25 à 40 parties en poids, de préférence de 30 à 35 parties en poids d'un mélange de monomères éthyléniquement insaturés choisis parmi les acrylates ou méthacrylates d'alkyle en $C_1$-$C_{20}$, l'acrylonitrile, l'acrylamide ou le styrène, ledit mélange contenant de 60 à 70 % en poids d'acrylate de butyle ;

. et le complement à 100 parties en poids d'au moins un ester monoéthyléniquement insaturé d'un acide carboxylique en présence de 3 à 30 parties en poids, de préférence de 3 à 15 et tout particulièrement de 5 à 8 parties en poids, d'un polyester sulfoné hydrodispersable.

Selon une variante du procédé faisant l'objet de l'invention, jusqu'à 10 % environ du poids d'acrylate de butyle peuvent être remplacés par du méthacrylate de méthyle.

Un mode préférentiel de réalisation consiste à mettre en oeuvre un mélange constitué d'au moins un acide carboxylique éthyléniquement insaturé, d'acrylate de butyle (10 % en poids environ dudit acrylate pouvant être remplacé par du méthacrylate de butyle) et d'au moins un ester monoéthyléniquement insaturé d'un acide carboxylique, en présence d'un polyester sulfoné hydrodispersable, avec un rapport pondéral acrylate de butyle/polyester sulfoné hydrodispersable de l'ordre de 0,8 à 8,5 et de préférence de l'ordre de 2,5 à 4.

L'opération de polymérisation peut être réalisée en émulsion aqueuse de manière classique, en présence d'un amorceur hydrosoluble de polymérisation, d'un émulsifiant et éventuellement d'un agent limiteur de chaine.

Des exemples de polyesters sulfonés hydrodispersables et de monomères mis en oeuvre ont été ci-dessus donnés. La nature et la quantité de ou des monomère(s) éthyléniquement insaturés éventuellement présents à côté de l'acrylate de butyle peuvent être aisément déterminées par l'homme de l'art en fonction des conditions d'utilisation future du polyester greffé ; en effet ces conditions d'utilisation fixent les propriétés dudit produit comme par exemple sa température de transition vitreuse, sa dureté, son hydrophilie, ses propriétés mécaniques telles que l'allongement et la résistance à la rupture...; il est connu que l'ajout de styrène ou de méthacrylate de méthyle par exemple conduit à un polymère plus dur tandis que l'ajout d'acrylate d'hexyle aura l'effet contraire.

L'amorceur hydrosoluble peut être représenté plus particulièrement par les hydropéroxydes tels que l'eau oxygénée, l'hydropéroxyde de cumène, l'hydroperoxyde de tertiobutyle, l'hydropéroxyde de diisopropylbenzène, et par les persulfates tels que le persulfate de sodium, le persulfate de potassium, le persulfate d'ammonium.

Il peut être employé en quantités comprises entre 0,05 et 2 % en poids par rapport au poids de la composition monomère. Ces amorceurs sont éventuellement associés à un réducteur, tel que les bisulfite ou le formaldéhydesulfoxylate de sodium, les polyéthylèneamines, les sucres : dextrose, saccharose, les sels métalliques. Les quantités de réducteur utilisées varient de 0 à 3 % en poids par rapport au poids de la composition monomère.

En tant qu'agent émulsifiant, on peut mettre en oeuvre les agents anioniques classiques représentés notamment par les sels d'acides gras, les alkylsulfates, les alkylsulfonates, les alkylarylsulfonates, les sulfosuccinates, les alkylphosphates de métaux alcalins, les sels de l'acide abiétique hydrogénés ou non, les agents non-ioniques tels que les alcools gras polyéthoxylés, les alkylphénols polyéthoxylés, les alkylphénols polyethyoxylés sulfatés, les acides gras polyéthoxylés ...

Ils sont employés à raison de 0,01 à 5 % en poids par rapport au poids de la composition monomère.

L'agent limiteur de chaine peut éventuellement être mis en oeuvre dans des proportions allant de 0 à 3 % en poids par rapport à la composition monomère. Il est généralement choisi parmi les mercaptans tels que le N-dodécylmercaptan, le tertiododécyl mercaptan ; le cyclohexène ; les hydrocarbures halogénés tels que le chloroforme, le bromoforme, le tétrachlorure de carbone, le tétrabromure de carbone ; les dimères de l'$\alpha$ méthylstyrène.

L'opération de polymérisation peut être réalisée à une température de l'ordre de 60 à 80° C, de préférence de l'ordre de 70° C.

Cette opération dure de l'ordre de 6 à 12 heures et généralement de l'ordre de 10 heures.

Si désiré le latex obtenu, qui renferme généralement de l'ordre de 10 à 60 % en poids de polyester sulfoné greffé, peut être atomisé pour être stocké et véhiculé plus facilement.

Le produit à l'état de latex ou à l'état sec peut être solubilisé dans l'eau à l'aide d'une substance alcaline de préférence volatile (amines volatiles, ammoniaque). La solution ainsi obtenue renferme généralement de l'ordre de 5 à 30 % de son poids de polyester sulfoné greffé. Le latex ou de préférence sa solution est particulièrement bien adapté à l'encollage de fils ou de fibres en particulier sur métier jet d'eau ou sur métiers secs en atmosphère humide.

La présente invention concerne également un procédé d'encollage des chaînes de fils (yarns)textiles qui consiste à appliquer les polyesters sulfonés greffés hydrodispersables ci-dessus décrits en milieu aqueux, selon une technique classique dont le principe est d'immerger les fils dans un bain aqueux contenant le produit d'encollage à la concentration et à la température désirées, puis d'essorer lesdits fils par passage entre des rouleaux et enfin à sécher les fils encollés sur des cylindres chauffants, éventuellement par passage préalable dans des chambres chaudes : la chaîne est alors prête à être tissée.

Parmi les méthodes classiques d'encollage pour fil continu (filament yarn ou continuous filament yarn) on peut citer par exemple l'encollage en sectionnel (european system), l'encollage conventionnel (classic system ou english system) et l'encollage en nappe primaire (single end sizing ou japan system)..

Les produits d'encollage de l'invention sont particulièrement intéressants pour apprêter les fils (filament yarns) synthétiques de polytéréphtalate d'éthylèneglycol qui sont parmi les fils textiles (yarns) les plus difficiles à encoller mais sont également utilisables pour des fibres (spun yarns) de polytéréphtalate d'éthylèneglycol mélangées avec des fibres naturelles pour des fibres de verre ou pour d'autres fils comme : les fils synthétiques tels que acryliques, polyimides, chlorofibre, polyéthylène, polypropylène ou les fils artificiels tels que acétates, triacétates, viscose...

De plus, ils permettent d'encoller n'importe quel type de fils qu'ils soient texturés ou non, tordus ou non et selon n'importe quelle technique d'encollage que ce soit de l'encollage en sectionnel, conventionnel, en nappe primaire ou autre.

Un avantage très important de ces produits est qu'ils résistent aux contraintes de rendement des nouveaux métiers à tisser. Ils permettent d'effectuer l'encollage et le tissage à grande vitesse. En outre, ils sont facilement éliminables à l'eau.

EXEMPLE 1

Dans un réacteur de 6 litres muni d'un agitateur à ancre, on introduit :
– 2100 g d'eau
– 9,4 g d'acétate de sodium
– 9,4 g de nonylphénol éthoxylé partiellement sulfaté contenant 25 motifs oxyde d'éthylène
– 502 g de GEROL PS 20 (polyester sulfoné commercialisé par RHONE-POULENC) en solution aqueuse à 26,1 % (ce qui correspond à 131 g de produit sec).

Le mélange est porté à 70° C sous agitation à 150 t/mn.

On ajoute 9,4 g de persulfate d'ammonium dissous dans 65 g d'eau.

On introduit en continu :
– d'une part pendant 6 heures un mélange de :
    – 1370 g d'acétate de vinyle (VA)
    – 375 g d'acrylate de butyle (BuA)
    – 131 g d'acide acrylique (AA)
    – 7,5 g de tertiododécylmercaptan
– d'autre part pendant 8 heures, 7,5 g d'hydroperoxyde de tertiobutyle dissous dans 46 g d'eau
– ainsi que pendant 8 heures

– 12,75 g de formaldehyde sulfoxylate de sodium

– 4,7 g de bicarbonate de sodium dissous dans 300 g d'eau.

Les trois introductions en continu démarrent simultanément.

A la fin des introductions on laisse le milieu à 70° C pendant 1 heure puis on refroidit.

On obtient un latex de 40,8 % d'extrait sec.

EXEMPLE 2

On répète l'opération décrite à l'exemple 1 à partir des quantités de produits suivantes :

– 2024 g d'eau

– 9,4 g d'acétate de sodium

– 9,4 g de nonylphénol éthoxylé partiellement sulfaté

– 103 g de GEROL PS 20, exprimés en produit sec (392 g de solution aqueuse à 26,3 %)

– 9,4 g de persulfate d'ammonium dans 65 g d'eau

– 1294 g d'acétate de vinyle

– 169 g d'acide acrylique

– 375 g d'acrylate de butyle

– 37,5 de méthacrylate de butyle

– 0 g de tertiododecylmercaptan

– 7,5 g d'hydroperoxyde de tertiobutyle

– 12,75 g de formaldehyde sulfoxylate de sodium ⎫ dilués dans

– 4,7 g de bicarbonate de sodium ⎭ 450 g d'eau

On obtient un latex de 40 % d'extrait sec.

EXEMPLE 3

On répète l'opération décrite à l'exemple 1 à partir des quantités de produits suivantes :

– 1005 g d'eau

– 7,5 g d'acétate de sodium

– 7,5 g de nonylphénol éthoxylé partiellement sulfaté

– 450 g de GEROL PS 20, exprimés en produit sec (1711 g de solution aqueuse à 26,3 %)

– 7,5 g de persulfate d'ammonium dans 75 g d'eau

– 1095 g d'acétate de vinyle

– 105 g d'acide acrylique

– 300 g d'acrylate de butyle

– 0 g de tertiododecylmercaptan

– 8,57 g d'hydroperoxyde de tertiobutyle

– 10,20 g de formaldehyde sulfoxylate de sodium ⎫ dilués dans

– 3,75 g de bicarbonate de sodium ⎭ 450 g d'eau

On obtient un latex de 40,5 % d'extrait sec.

EXEMPLE 4

On répète l'opération décrite à l'exemple 1 à partir des quantités de produits suivantes :

– 909 g d'eau

– 6,25 g d'acétate de sodium

– 6,25 g de nonylphénol éthoxylé partiellement sulfaté

– 375 g de GEROL PS 20, exprimés en produit sec (1431 g de solution aqueuse à 26,2 %)

– 6,25 g de persulfate d'ammonium dans 30 g d'eau

– 1012,5 g d'acétate de vinyle

– 87,5 g d'acide acrylique

– 150 g d'acrylate de butyle
– 7,5 g de tertiododecylmercaptan
– 7,14 g d'hydroperoxyde de tertiobutyle

- 8,5 g de formaldehyde sulfoxylate de sodium } dilués dans
- 3,1 g de bicarbonate de sodium } 300 g d'eau

– 2,5 g de mercaptoethanol

On obtient un latex de 40,5 % d'extrait sec.

EXEMPLE 5

On répète l'opération décrite à l'exemple 1 à partir des quantités de produits suivantes :
– 2084 g d'eau
– 9,36 g d'acétate de sodium
– 9,37 g de nonylphénol éthoxylé partiellement sulfaté
– 150 g de GEROL PS 20, exprimés en produit sec (569 g de solution aqueuse à 26,4 %)
– 9,37 g de persulfate d'ammonium dans 65 g d'eau
– 1406 g d'acétate de vinyle
– 337,5 g d'acrylate de butyle
– 7,5 g de tertiododecylmercaptan
– 131,2 g d'acide acrylique
– 7,5 g d'hydropéroxyde de tertiobutyle

- 12,75 g de formaldehyde sulfoxylate de sodium } dilués dans
- 4,7 g de bicarbonate de sodium } 300 g d'eau

On obtient un latex de 41 % d'extrait sec.

EXEMPLE 6 (comparatif)

On répète l'opération décrite à l'exemple 1 à partir des quantités de produits suivantes :
– 1385 g d'eau
– 7,5 g d'acétate de sodium
– 7,5 g de nonylphénol éthoxylé partiellement sulfaté
– 180 g de GEROL PS 20, exprimés en produit sec (679 g de solution aqueuse à 26,5 %)
– 7,5 g de persulfate d'ammonium dans 75 g d'eau
– 945 g d'acétate de vinyle
– 105 g d'acide acrylique
– 450 g d'acrylate de butyle
– 0 g de tertiododecylmercaptan
– 8,57 g d'hydroperoxyde de tertiobutyle

- 10,2 g de formaldehyde sulfoxylate de sodium } dilués dans
- 3,75 g de bicarbonate de sodium } 450 g d'eau

On obtient un latex de 40,6 % d'extrait sec.

EXEMPLE 7 (comparatif)

On répète l'opération décrite à l'exemple 1 à partir des quantités de produits suivantes :
– 1005 g d'eau
– 7,5 g d'acétate de sodium

6

− 7,5 g de nonylphénol éthoxylé partiellement sulfaté

− 450 g de GEROL PS 20, exprimés en produit sec (1711 g de solution aqueuse à 26,3 %)

− 7,5 g de persulfate d'ammonium dans 75 g d'eau

− 945 g d'acétate de vinyle

− 105 g d'acide acrylique

− 450 g d'acrylate de butyl

− 0 g de tertiododecylmercaptan

− 8,57 g d'hydroperoxyde de tertiobutyle

− 10,20 g de formaldehyde sulfoxylate de sodium ⎫ dilués dans

− 3,75 g de bicarbonate de sodium ⎭ 450 g d'eau

On obtient un latex de 40,4 % d'extrait sec.

EXEMPLE 8 (comparatif)

Dans un réacteur de 6 litres muni d'un agitateur à ancre on introduit :

− 2156 g d'eau

− 1,5 g de NANZA SB 62 à base de dodecylbenzènesulfonate de sodium, commercialisé par ALBRIGHT & WILSON

− 450 g de GEROL PS 20 sec.

Le mélange est porté à 80°C sous agitation à 150 t/mn. On ajoute 1,875 g de persulfate d'ammonium dissous dans 20 g d'eau.

On introduit en continu :

− d'une part pendant 5 heures un mélange de :

. 75 g d'acide acrylique (AA)

. 75 g d'acide méthacrylique(MAA)

. 300 g d'acrylate d'éthyle (EA)

. 600 g d'acrylate de butyle (BuA)

. 450 g de méthacrylate de méthyle (MeMA)

. 5,62 g de tertiododecylmercaptan

− d'autre part pendant 5 heures un mélange de :

. 7,5 g de persulfate d'ammonium ⎫

. 30 g de nonylphénol éthoxylé ⎬ dissous dans

partiellement sulfaté ⎭ 420 g d'eau

Les deux introductions démarrent simultanément.

A la fin des introductions on laisse le milieu à 80°C pendant 1 heure et on refroidit.

On obtient un latex à 43 % d'extrait sec.

EXEMPLE 9 (comparatif)

On répète l'opération décrite à l'exemple 8, en mettant en oeuvre 150 g (au lieu de 450 g) de GEROL PS 20 sec et 1700 g (au lieu de 2156 g) l'eau.

Essai d'encollage

Des essais d'encollage ont été réalisés à l'aide de solutions aqueuses des produits des exemples 1 à 9, solutions constituant les bains de colle.

Ces solutions ont été préparées comme suit : après dilution à l'eau déminéralisée jusqu'à obtenir un extrait sec de 20 %, ces produits sont portés à 60°C puis additionnés en une demi-heure d'une solution aqueuse à 20 % d'ammoniaque jusqu'à obtenir un pH de l'ordre de 7,5.

L'opération d'encollage est réalisée à l'aide d'une machine de laboratoire SUCKER (commercialisée par SUCKER) adaptée pour fonctionner en système "nappe primaire", sur une chaîne de polyester 100 décitex, 88 brins, non tordus, la vitesse de passage sur l'encolleuse étant de 100 m/mn ; les réglages sont optimisés afin de déposer sur le fil 10 % en poids de polymère sec par rapport à la masse du fil.

Le principe de l'opération est le suivant : la chaîne de polyester est immergée dans le bain de colle puis séchée par passage dans des chambres chauffées à 145°C puis sur des cylindres chauffés à des températures décroissantes de 125 à 100°C ; un lubrifiant (cire fondue à 90°C) est appliqué sur le fil à un taux de 0,3 % par rapport à la masse du fil, à la sortie des cylindres sécheurs. Après refroidissement dans une chambre de refroidissement les fils sont enroulés sur les ensouples primaires ; celles-ci sont ensuite réunies pour confectionner une ensouple destinée au métier à tisser.

L'efficacité des produits testés est évaluée avant réunissage des ensouples primaires, à l'aide de l'appareil "SHIRLEY FILAMENT COUNTER" du SHIRLEY INSTITUT de Manchester selon la méthode publiée au 7ème Symposium de l'Encollage Textile de Mulhouse des 15, 16 et 17 octobre 1986.

Ce test consiste à mesurer l'aptitude d'un polymère à coller entre eux les brins unitaires formant le fil.

Lors de la mesure l'appareil enregistre et décompte les vibrations émises lors du sectionnement des éléments individualisés constitués d'un brin unitaire ou de plusieurs brins collés.

L'indice de cohésion C est exprimé par la relation

$$C = 100 \, (n - x)/(n - 1)$$

où $\underline{n}$ représente le nombre de brins unitaires constituant le fil

$\underline{x}$ le nombre d'éléments individualisés décomptés.

En l'absence de colle tous les brins unitaires sont indépendants ; x est alors égal à n et C = 0.

La cohésion est maximale lorsque tous les brins unitaires sont liés ; x est alors égal à 1 et C = 100.

L'indice de cohésion est mesuré avant et après travail sur un usomètre WEBTESTER de l'Institut Textile de Reutligen (mesure après 50, 150 et 300 cycles).

(Cet appareil simule le travail subi par le fil lors de l'opération de tissage).

On trace ensuite une courbe traduisant la perte de cohésion du fil encollé en fonction du travail subi (abrasion).

On donne ci-après la référence des courbes correspondant aux produits testés.

| Produit de l'exemple | Référence |
|---|---|
| 1 | D |
| 2 | F |
| 3 | G |
| 4 | I |
| 5 | E |
| 6 | – |
| 7 | J |
| 8 | H |
| 9 | K |

Les exemples 1 à 5 sont également comparés :

– à une solution de GEROL AS 10 commercialisé par RHONE-POULENC (copolymère "tout acrylique" à base d'acrylate de butyle, c'est-à-dire ne dérivant pas de monomères autres que des esters ou acides acryliques ou méthacryliques et dépourvu de motifs polyester sulfoné).

– à une solution de GEROL VS 30 commercialisé par RHONE-POULENC (copolymère dérivé d'acétate de vinyle en forte proportion, d'acrylate de butyle et d'acide carboxylique insaturé et dépourvu de motifs polyester sulfoné)

– et à une solution de GEROL PS 20 commercialisé par RHONE-POULENC (polyester sulfoné hydrodispersable ) ;

La référence des courbes correspondant à ces produits est la suivante :

| Produit | Référence |
|---|---|
| GEROL AS 10 | C |
| GEROL VS 30 | B |
| GEROL PS 20 | A. |

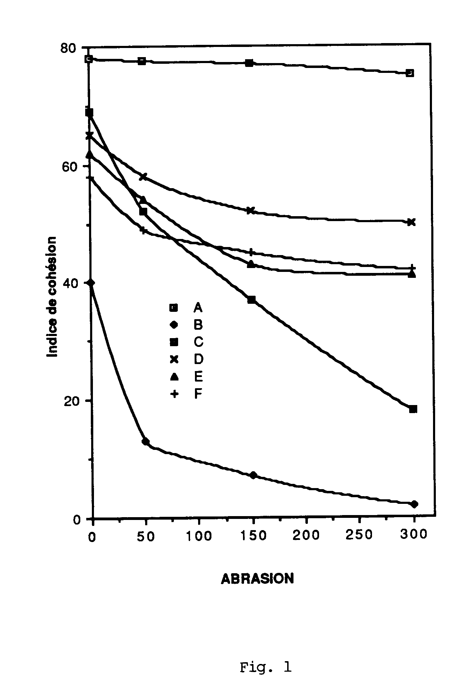

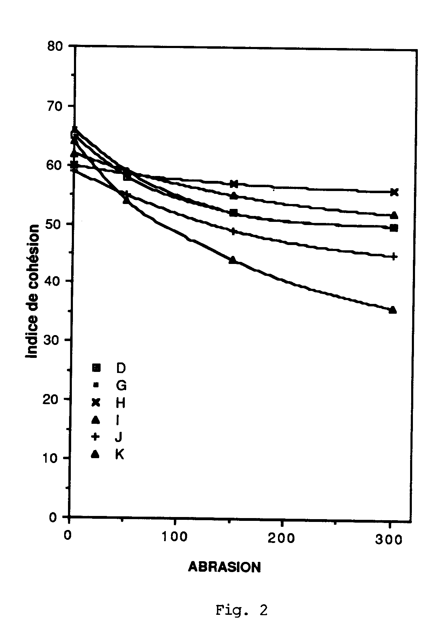

L'ensemble de courbes correspondant aux produits de l'invention ou aux produits comparatifs font l'objet des figures 1 et 2.

L'analyse de ces courbes montre que :

– le GEROL AS 10 (copolymère "tout acrylique") est nettement plus performant que le GEROL VS 30 (copolymère à base d'acétate de vinyle)

– par contre d'une manière surprenante le produit de l'exemple 1 et celui de l'exemple 9, dont les compositions sont respectivement les suivantes :

|  |  |  |  |  |  |
|---|---|---|---|---|---|
|  |  | MAA | 5 |  |  |
| AA | 7 | AA | 5 |  |  |
| VA | 73 | EA | 20 | ⎫ |  |
| BuA | 20 | BuA | 40 | ⎬ | 90 |
|  |  | MeMA | 30 | ⎭ |  |
| PS 20 | 7 | PS 20 | 7 |  |  |

présentent des résultats voisins, alors qu'on aurait dû s'attendre à des performances nettement supérieures du produit de l'exemple 9. Le prix des esters acryliques étant d'environ 3 fois celui de l'acétate de vinyle, on conçoit immédiatement l'intérêt du produit de l'exemple 1 par rapport à celui de l'exemple 9

– certes le produit de l'exemple 8 est un peu plus performant que celui de l'exemple 1, mais son taux d'acrylate de butyle et de GEROL PS 20 rendent son prix prohibitif pour la performance correspondante. En effet le prix du GEROL PS 20 est d'au moins 10 fois celui de l'acétate de vinyle ;

– il y a intérêt d'après l'exemple 4,à respecter un certain rapport préférentiel entre le taux de GEROL PS 20 et celui d'acrylate de butyle.

Le produit de l'exemple 7 présente de bons résultats de test de cohésion, mais n'est toutefois pas utilisable industriellement car il génère du blocking ("blocking on beams" - recollage sur ensouples) lors du réunissage des ensouples primaires ou du déroulement de la bobine de l'ensouple sur le métier.

Le procédé de l'exemple 6 n'a pu subir le test de cohésion car de nombreuses ruptures de brins unitaires du fil encollé dues au blocking ont été constatées lors du déroulage des bobines pour réaliser le test.

## Revendications

1. Polyester sulfoné greffé par des motifs dérivés de monomères vinyliques caractérisé en ce qu'il contient :
– de 3 à 30 parties en poids d'un polymère tronc constitué par un polyester sulfoné hydrodispersable
– et de 100 parties en poids de greffons dérivés d'une composition monomère comprenant :
. de 5 à 13 parties en poids d'au moins un acide carboxylique éthyléniquement insaturé
. de 12 à 25 parties en poids d'acrylate de butyle ou de 25 à 40 parties en poids d'un mélange de monomères éthyléniquement insaturés choisis parmi les acrylates ou méthacryltes d'alkyle en $C_1$-$C_{20}$, l'acrylonitrile, l'acrylamide ou le styrène, ledit mélange contenant de 60 à 70 % en poids d'acrylate de butyle
. et le complément à 100 parties en poids d'au moins un ester monoéthyléniquement insaturé d'un acide carboxylique.

2. Polyester sulfoné greffé selon la revendication 1 caractérisés en ce qu'ils contient :
– de 3 à 15 parties en poids, d'un polymère tronc constitué par un polyester sulfoné hydrodispersable
– et de 100 parties en poids de greffons dérivés d'une composition monomère comprenant :
. de 6 à 9 parties en poids, d'au moins un acide carboxylique éthyléniquement insaturé,
. de 17 à 22 parties en poids d'acrylatede butyle ou de 30 à 35 parties en poids d'un mélange de monomères éthyléniquement insaturés choisis parmi les parmi les acrylates ou méthacrylates d'alkyle en C$_1$-C$_{20}$, l'acrylonitrile, l'acrylamide ou le styrène, ledit mélange contenant de 60 à 70 % en poids d'acrylate de butyle

. et le complément à 100 parties en poids d'au moins un ester monoéthyléniquement insaturé d'un acide carboxylique.

3. Polyester sulfoné greffé selon la revendication 1 ou 2 caractérisé en ce qu'il contient de 5 à 8 parties en poids d'un polymère tronc constitué par un polyester sulfoné hydrodispersable.

4. Polyesters sulfoné greffé, selon l'une quelconque des revendications 1 à 3 caractérisé en ce que jusqu'à 10 % environ du poids d'acrylate de butyle sont remplacés par du méthacrylate de butyle.

5. Polyester sulfoné greffé selon l'une quelconque des revendications 1 à 4 caractérisé en ce que le rapport pondéral acrylate de butyle/polyester sulfoné hydrodispersable est de l'ordre de 0,8 à 8,5.

6. Polyester sulfoné greffé selon la revendication 5 caractérisé en ce que le rapport pondéral acrylate de butyle/polyester sulfoné hydrodispersable est de l'ordre de 2,5 à 4.

7. Polyester sulfoné greffé selon l'une quelconque des revendications 1 à 6 caractérisé en ce que le polyester sulfoné hydrodispersable présente une masse moléculaire moyenne en nombre comprise entre 10.000 et 35.000, un indice d'acide inférieur à 5 mg de KOH/g, un taux de soufre compris entre 0,8 et 2 % en poids.

8. Polyester sulfoné greffé selon l'une quelconque des revendications 1 à 7 caractérisé en ce que l'acide carboxylique éthyléniquement insaturé est de l'acide acrylique et/ou de l'acide méthacrylique et l'ester monoéthyléniquement insaturé d'acide carboxylique de l'acétate de vinyle.

9. Dispersion aqueuse de polyester sulfoné greffé caractérisée en ce qu'elle renferme de 10 à 60 % de son poids de polyester sulfoné greffé faisant l'objet de l'une quelconque des revendications 1 à 8.

10. Solution aqueuse de polyester sulfoné greffé caractérisée en ce qu'elle renferme de 5 à 30 % de son poids des polyester sulfoné greffé faisant l'objet de l'une quelconque des revendications 1 à 8

11. Procédé de préparation de polyester sulfoné greffé selon l'une des revendications 1 à 8 par copolymérisation en milieu aqueux de 100 parties en poids, d'une composition monomère constituée :

. de 5 à 13 parties en poids d'au moins un acide carboxylique éthyléniquement insaturé ;

. de 12 à 25 parties en poids d'acrylate de butyle ou de 25 à 40 parties en poids, d'un mélange de monomères éthyléniquement insaturés choisis parmi les acrylates ou méthacrylates d'alkyle en C$_1$-C$_{20}$, l'acrylonitrile, l'acrylamide ou le styrène, ledit mélange contenant de 60 à 70 % en poids d'acrylate de butyle

. et le complément à 100 parties en poids d'au moins un ester monoéthyléniquement insaturé d'un acide carboxylique en présence de 3 à 30 parties en poids d'un polyester sulfoné hydrodispersable et éventuellement élimination de l'eau.

12. Procédé selon la revendication 11 de préparation de polyester sulfoné greffé par copolymérisation en milieu aqueux de 100 parties en poids, d'une composition monomère constituée :

. de 6 à 9 parties en poids, d'au moins un acide carboxylique éthyléniquement insaturé ;

. de 17 à 22 parties en poids d'acrylate de butyle ou de 30 à 35 parties en poids d'un mélange de monomères èthyléniquement insaturés choisis parmi les acrylates ou méthacrylates d'alkyle en C$_1$-C$_{20}$, l'acrylonitrile, l'acrylamide ou le styrène, ledit mélange contenant de 60 à 70 % en poids d'acrylate de butyle

. et le complément à 100 parties en poids d'au moins un ester monoéthyléniquement insaturé d'un acide carboxylique en présence de 3 à 15 parties en poids d'un polyester sulfoné hydrodispersable et éventuellement élimination de l'eau.

13. Procédé selon la revendication 11 ou 12 caractérisé en ce que la copolymèrisation de la composition monomère est réalisée en présence de 5 à 8 parties en poids de polyester sulfoné hydrodispersable.

14. Procédé selon l'une quelconque des revendications 11 à 13 caractérisé en ce que jusqu'à 10 % environ du poids d'acrylate de butyle sont remplacés par du méthacrylate de butyle.

15. Procédé selon l'une quelconque des revendications 11 à 14 caractérisé en ce que le rapport pondéral acrylate de butyle/polyester sulfoné hydrodispersable est de l'ordre de 0,8 à 8,5.

16. Procédé selon la revendication 14 caractérisé en ce que le rapport pondéral acrylate de butyle/polyester sulfoné hydrodispersable est de l'ordre de 2,5 à 4.

17. Procédé selon l'une quelconque des revendications 11 à 16 caractérisé en ce que le polyester sulfoné hydrodispersable présente une masse moléculaire moyenne en nombre comprise entre 10.000 et 35.000, un indice d'acide inférieur à 5 mg de KOH/g, un taux de soufre compris entre 0,8 et 2 % en poids.

18. Procédé selon l'une quelconque des revendications 11 à 17 caractérisé en ce que l'acide carboxylique éthyléniquement insaturé est de l'acide acrylique et/ou de l'acide méthacrylique et l'ester monoéthyléniquement insaturé d'acide carboxylique de l'acétate de vinyle.

19. Procédé de préparation de solutions aqueuses de polyester sulfoné greffé par solubilisation dans l'eau à l'aide d'une substance alcaline de polyester sulfoné greffé: faisant l'objet des revendications 1 à 8.

20. Utilisation des dispersions aqueuses de polyester sulfoné greffé faisant l'objet de la revendication 9 à l'encollage des fils et des fibres textiles.

21. Utilisation des solutions aqueuses de polyester sulfoné greffé faisant l'objet de la revendication 10 à l'encollage des fils et des fibres textiles.

**Patentansprüche**

1. Sulfonierter mit Struktureinheiten von Vinylmonomer derivaten gepfropfter Polyester, dadurch gekennzeichnet, daß er enthält:

– 3 bis 30 Gewichtsteile eines Grundpolymeren aus einem in Wasser dispergierbaren, sulfonierten Polyester

– und 100 Gewichtsteile Pfropfmonomere, die abgeleitet sind von einer Monomerzusammensetzung, die enthält:

. 5 bis 13 Gewichtsteile wenigstens einer ethyle nisch ungesättigten Carbonsäure

. 12 bis 25 Gewichtsteile Butylacrylat oder 25 bis 40 Gewichtsteile eines Gemisches aus ethylenisch ungesättigten Monomeren, ausgewählt aus $C_1$ bis $C_{20}$-Alkylacrylaten oder -methacrylaten, Acrylnitril, Acrylamid oder Styrol, wobei das Gemisch 60 bis 70 Gewichtsprozent Butylacrylat enthält

. und die Ergänzung auf 100 Gewichtsteile mit wenigstens einem monoethylenisch ungesättigten Carbonsäureester.

2. Gepfropfter, sulfonierter Polyester nach Anspruch 1, dadurch gekennzeichnet, daß er enthält:

– 3 bis 15 Gewichtsteile eines Grundpolymeren aus einem in Wasser dispergierbaren, sulfonierten Polyester

– und 100 Gewichtsteile von Pfropfderivaten einer Monomerzusammensetzung, enthaltend:

. 6 bis 9 Gewichtsteile wenigstens einer ethylenisch ungesättigten Carbonsäure

. 17 bis 22 Gewichtsteile Butylacrylat oder 30 bis 35 Gewichtsteile eines Gemisches aus ethylenisch ungesättigten Monomeren, ausgewählt aus $C_1$ bis $C_{20}$-Alkylacrylaten oder -methacrylaten, Acrylnitril, Acrylamid oder Styrol, wobei das Gemisch 60 bis 70 Gewichtsprozent Butylacrylat enthält

. und die Ergänzung auf 100 Gewichtsteile mit wenigstens einem monoethylenisch ungesättigten Carbonsäureester.

3. Gepfropfter, sulfonierter Polyester nach Anspruch 1 oder 2, dadurch gekennzeichnet, daß er 5 bis 8 Gewichtsteile eines Grundpolymeren aus einem in Wasser dispergierbaren, sulfonierten Polyester enthält.

4. Gepfropfter, sulfonierter Polyester nach einem der Ansprüche 1 bis 3, dadurch gekennzeichnet, daß bis zu etwa 10% des Gewichts des Butylacrylats durch Butyl-methacrylat ersetzt werden.

5. Gepfropfter, sulfonierter Polyester nach einem der Ansprüche 1 bis 4, dadurch gekennzeichnet, daß das Gewichtsverhältnis Butylacrylat/wasserdispergierbarem, sulfoniertem Polyester 0,8 bis 8,5 beträgt.

6. Gepfropfter, sulfonierter Polyester nach Anspruch 5, dadurch gekennzeichnet, daß das Gewichtsverhältnis Butylacrylat/wasserdispergierbarem, sulfoniertem Polyester 2,5 bis 4 beträgt.

7. Gepfropfter, sulfonierter Polyester nach einem der Ansprüche 1 bis 6, dadurch gekennzeichnet, daß der wasserdispergierbare, sulfonierte Polyester eine mittlere Molekularmasse zwischen 10.000 und 35.000, eine Säurezahl kleiner als 5 mg KOH/g und einen Schwefelgehalt zwischen 0,8 und 2 Gewichtsprozent aufweist.

8. Gepfropfter, sulfonierter Polyester nach einem der Ansprüche 1 bis 7, dadurch gekennzeichnet, daß die ethylenisch ungesättigte Carbonsäure Acrylsäure und/ oder Methacrylsäure ist und daß der monoethylenisch ungesättigte Carbonsäureester Vinylacetat ist.

9. Wäßrige Dispersion eines gepfropften, sulfonierten Polyesters, dadurch gekennzeichnet, daß sie 10 bis 60 Gewichtsprozent des gepfropften, sulfonierten Polyesters aufweist, der Gegenstand eines der Ansprüche 1 bis 8 ist.

10. Wäßrige Lösung eines gepfropften, sulfonierten Polyesters, dadurch gekennzeichnet, daß sie 5 bis 30 Gewichtsprozent des gepfropften, sulfonierten Polyesters aufweist, der Gegenstand eines der Ansprüche 1 bis 8 ist.

11. Verfahren zur Herstellung des gepfropften, sulfonierten Polyesters nach einem der Ansprüche 1 bis 8 durch Copolymerisation in einem wäßrigen Medium von 100 Gewichtsteilen einer Monomerzusammensetzung, bestehend aus:

. 5 bis 13 Gewichtsteilen wenigstens einer ethylenisch ungesättigten Carbonsäure

. 12 bis 25 Gewichtsteilen Butylacrylat oder 25 bis 40 Gewichtsteilen eines Gemisches aus ethylenisch ungesättigten Monomeren, ausgewählt aus $C_1$ bis $C_{20}$-Alkylacrylaten oder -methacrylaten, Acrylnitril, Acrylamid oder Styrol, wobei das Gemisch 60 bis 70 Gewichtsprozent Butylacrylat enthält

. und der Ergänzung auf 100 Gewichtsteile mit wenigstens einem monoethylenisch ungesättigten Carbonsäureester, in Gegenwart von 3 bis 30 Gewichtsteilen eines wasserdispergierbaren, sulfonierten Poly esters und gegebenenfalls Entfernung des Wassers.

12. Verfahren zur Herstellung des gepfropften, sulfonierten Polyesters nach Anspruch 11 durch Copolymerisation in einem wäßrigen Medium von 100 Gewichtsteilen einer Monomerzusammensetzung, bestehend aus:

. 6 bis 9 Gewichtsteilen wenigstens einer ethylenisch ungesättigten Carbonsäure

. 17 bis 22 Gewichtsteilen Butylacrylat oder 30 bis 35 Gewichtsteilen eines Gemisches aus ethylenisch ungesättigten Monomeren, ausgewählt aus $C_1$ bis $C_{20}$ Alkylacrylaten oder -methacrylaten, Acrylnitril, Acrylamid oder Styrol, wobei das Gemisch 60 bis 70 Gewichtsprozent Butylacrylat enthält

. und der Ergänzung auf 100 Gewichtsteile mit wenigstens einem monoethylenisch ungesättigten Carbonsäureester, in Gegenwart von 3 bis 15 Gewichtsteilen eines wasserdispergierbaren, sulfonierten Polyesters und gegebenenfalls Entfernung des Wassers.

13. Verfahren nach einem der Ansprüche 11 oder 12, dadurch gekennzeichnet, daß die Copolymerisation der Monomerzusammensetzung in Gegenwart von 5 bis 8 Gewichtsteilen des wasserdispergierbaren, sulfonierten Polyesters durchgeführt wird.

14. Verfahren nach einem der Ansprüche 11 bis 13, dadurch gekennzeichnet, daß bis zu etwa 10% des Gewichts des Butylacrylats durch Butylmethacrylat ersetzt werden.

15. Verfahren nach einem der Ansprüche 11 bis 14, dadurch gekennzeichnet, daß das Gewichtsverhältnis Butylacrylat/wasserdispergierbarem, sulfoniertem Polyester 0,8 bis 8,5 beträgt.

16. Verfahren nach Anspruch 14, dadurch gekennzeichnet, daß das Gewichtsverhältnis Butylacrylat/wasserdispergierbarem, sulfoniertem Polyester 2,5 bis 4 beträgt.

17. Verfahren nach einem der Ansprüche 11 bis 16, dadurch gekennzeichnet, daß der wasserdispergierbare, sulfonierte Polyester eine mittlere Molekularmasse zwischen 10.000 und 35.000, eine Säurezahl kleiner als 5 mg KOH/g und einen Schwefelgehalt von 0,8 bis 2 Gewichtsprozent aufweist.

18. Verfahren nach einem der Ansprüche 11 bis 17, dadurch gekennzeichnet, daß die ethylenisch ungesättigte Carbonsäure Acrylsäure und/oder Methacrylsäure und der monoethylenisch ungesättigte Carbonsäureester Vinylacetat ist.

19. Verfahren zur Herstellung von wäßrigen, gepfropften, sulfonierten Polyesterlösungen durch Löslichmachen des gepfropften, sulfonierten Polyesters, der Gegenstand der Ansprüche 1 bis 8 ist, in Wasser mit Hilfe einer alkalischen Substanz.

20. Verwendung von wäßrigen Dispersionen eines gepfropften, sulfonierten Polyesters, der Gegenstand des Anspruchs 9 ist, zum Schlichten von Textilfäden und -fasern.

21. Verwendung von wäßrigen Lösungen eines gepfropften, sulfonierten Polyesters, der Gegenstand des Anspruchs 10 ist, zum Schlichten der Textilfäden und -fasern.

## Claims

1. A sulphonated polyester grafted by units derived from vinyl monomers, characterised in that it contains:
– from 3 to 30 parts by weight of a stock polymer comprising a water dispersible sulphonated polyester
– and 100 parts by weight of grafts derived from a monomeric composition made up of
. from 5 to 13 parts by weight of at least one ethylenically unsaturated carboxylic acid
. from 12 to 25 parts by weight of butyl acrylate or from 25 to 40 parts by weight of a mixture of ethylenically unsaturated monomers selected from $C_1$ to $C_{20}$ alkyl acrylates or methacrylates, acrylonitrile, acrylamide or styrene, said mixture containing from 60 to 70% by weight of butyl acrylate
. and the complement to 100 parts by weight of at least one monoethylenically unsaturated carboxylic acid ester.

2. The grafted sulphonated polyester of claim 1, characterised in that it contains:
– from 3 to 15 parts by weight of a stock polymer comprising a water dispersible sulphonated polyester
– and 100 parts by weight of grafts derived from a monomeric composition comprising:
. from 6 to 9 parts by weight of at least one ethylenically unsaturated carboxylic acid
. from 17 to 22 parts by weight of butyl acrylate or from 30 to 35 parts by weight of a mixture of ethylenically unsaturated monomers selected from $C_1$ to $C_{20}$ alkyl acrylates or methacrylates, acrylonitrile, acrylamide or styrene, said mixture containing from 60 to 70% by weight of butyl acrylate
. and the complement to 100 parts by weight of at least one monoethylenically unsaturated carboxylic acid ester.

3. The grafted sulphonated polyester of claim 1 or 2, characterised in that it contains from 5 to 8 parts by weight of a stock polymer comprising a water dispersible sulphonated polyester.

4. The grafted sulphonated polyester of any of claims 1 to 3, characterised in that up to about 10% of the weight of butyl acrylate is replaced with butyl methacrylate.

5. The grafted sulphonated polyester of any of claims 1 to 4, characterised in that the weight ratio of butyl acrylate : water dispersible sulphonated polyester is approximately from 0.8 to 8.5.

6. The grafted sulphonated polyester of claim 5, characterised in that the weight ratio of butyl acrylate : water dispersible sulphonated polyester is approximately from 2.5 to 4.

7. The grafted sulphonated polyester of any of claims 1 to 6, characterised in that the water dispersible sulphonated polyester has a number average molecular weight of from 10 000 to 35 000, an acid index below 5 mg of KOH/g and a sulphur content from 0.8 to 2% by weight.

8. The grafted sulphonated polyester of any of claims 1 to 7, characterised in that the ethylenically unsaturated carboxylic acid is acrylic acid and/or methacrylic acid, and the monoethylenically unsaturated carboxylic acid ester is vinyl acetate.

9. An aqueous dispersion of grafted sulphonated polyester, characterised in that it contains from 10 to 60% by weight of grafted sulphonated polyester according to any of claims 1 to 8.

10. An aqueous dispersion of grafted sulphonated polyester, characterised in that it contains from 5 to 30% by weight of grafted sulphonated polyester according to any of claims 1 to 8.

11. A method of preparing the grafted sulphonated polyester of any of claims 1 to 8, by copolymerising 100 parts by weight of a monomeric composition in an aqueous medium and if appropriate removing any water, the composition comprising:

. from 5 to 13 parts by weight of at least one ethylenically unsaturated carboxylic acid

. from 12 to 25 parts by weight of butyl acrylate or from 25 to 40 parts by weight of a mixture of ethylenically unsaturated monomers selected from $C_1$ to $C_{20}$ alkyl acrylates or methacrylates, acrylonitrile, acrylamide or styrene, said mixture containing from 60 to 70% by weight of butyl acrylate

. and the complement to 100 parts by weight of at least one monoethylenically unsaturated carboxylic acid ester, in the presence of 3 to 30 parts by weight of a water dispersible sulphonated polyester.

12. The method of claim 11 for preparing grafted sulphonated polyesters by copolymerising 100 parts by weight of a monomeric composition in an aqueous medium and if appropriate, removing any water, the composition comprising:

. from 6 to 9 parts by weight of at least one ethylenically unsaturated carboxylic acid

. from 17 to 22 parts by weight of butyl acrylate or from 30 to 35 parts by weight of a mixture of ethylenically unsaturated monomers selected from $C_1$ to $C_{20}$ alkyl acrylates or methacrylates, acrylonitrile, acrylamide or styrene, said mixture containing from 60 to 70% by weight of butyl acrylate

. and the complement to 100 parts by weight of at least one monoethylenically unsaturated carboxylic acid ester in the presence of 3 to 15 parts by weight of a water dispersible sulphonated polyester.

13. The method of claim 11 or 12, characterised in that the monomeric composition is copolymerised in the presence of 5 to 8 parts by weight of water dispersible sulphonated polyester.

14. The method of any of claims 11 to 13, characterised in that up to about 10% of the weight of butyl acrylate is replaced with butyl methacrylate.

15. The method of any of claims 11 to 14, characterised in that the butyl acrylate : water dispersible sulphonated polyester weight ratio is approximately from 0.8 to 8.5.

16. The method of claim 14, characterised in that the butyl acrylate : water dispersible sulphonated polyester weight ratio is approximately from 2.5 to 4.

17. The method of any of claims 11 to 16, characterised in that the water dispersible sulphonated polyester has a number average molecular weight from 10 000 to 35 000, an acid index below 5 mg of KOH/g and a sulphur content from 0.8 to 2% by weight.

18. The method of any of claims 11 to 17, characterised in that the ethylenically unsaturated carboxylic acid is acrylic acid and/or methacrylic acid, and the monoethylenically unsaturated carboxylic acid ester is vinyl acetate.

19. A method of preparing aqueous solutions of grafted sulphonated polyester, by solubilising grafted sulphonated polyester according to claims 1 to 8 in water with an alkaline substance.

20. Use of the aqueous dispersions of grafted sulphonated polyester according to claim 9, for sizing textile threads and fibres.

21. Use of the aqueous solutions of grafted sulphonated polyester according to claim 10, for sizing textile threads and fibres.

Fig. 1

Fig. 2